# EUROPEAN PATENT APPLICATION

(11) **EP 4 728 848 A1**
(43) Date of publication of application: **22.04.2026**
(21) Application number: 25208680.6
(22) Date of filing: 14.10.2025
(51) Int. Cl.: A01D 41/14, A01D 45/02, A01D 41/127

(54) **DECK PLATE CONTROL SYSTEM FOR AN AGRICULTURAL HARVESTER**

(30) Priority: 15.10.2024 US 202418915960
(71) Applicant: CNH Industrial America LLC, New Holland, PA 17557 (US)
(72) Inventor: Walker, Eric L., New Holland, 17557 (US); Finley, Bryan B., New Holland, 17557 (US); D'Amicantonio, Matthew, New Holland, 17557 (US); Fredricks, Eric R., New Holland, 17557 (US); Darrow, Lane, New Holland, 17557 (US); Adams, Joshua M., New Holland, 17557 (US)
(74) Representative: CNH Industrial IP Department

(57) **Abstract**

A deck plate control system (300) for an agricultural harvester (100) includes a controller (302) having a memory (308) and a processor (306). The controller (302) is configured to identify termination of a row unit cleaning process. In addition, the controller (302) is configured to control a deck plate actuator (304) to transition a pair of deck plates (228) of a row unit (208) to an operational spacing in response to identifying termination of the row unit cleaning process.

## Description

### BACKGROUND

The present disclosure relates generally to a deck plate control system for an agricultural harvester.

An agricultural harvester may be used to harvest agricultural crops, such as barley, beans, beets, carrots, corn, cotton, flax, oats, potatoes, rye, soybeans, wheat, or other plant crops. The agricultural harvester may include a header, which may be configured to efficiently harvest certain types of crops. For example, a corn header may be configured to efficiently harvest corn. The corn header may include row units that include components configured to separate ears of corn from stalks as the agricultural harvester travels through a field. Augers carry the ears of corn toward a processing system of the agricultural harvester, and the stalks are deposited on the field.

Each row unit is configured to separate the corn ear from the stalk, carry the corn ear toward a respective auger, and direct the stalk to the field. For example, each row unit may include a pair of feed rollers configured to grip the stalk and to rotate in opposite directions, thereby driving the stalk rearwardly and toward the field. Each row unit may also include a pair of deck plates positioned over the pair of feed rollers. The pair of deck plates are separated from one another along a lateral axis to define a gap. The spacing between the pair of deck plates may be manually controlled so the gap is sized to enable the stalk to pass through the gap and to block the corn ear from passing through the gap. If the operator observes that a row unit has become clogged (e.g., with a rock, with multiple corn ears, etc.), the operator may manually perform a row unit cleaning process, which may remove the clog from the row unit. The row unit cleaning process may include stopping forward movement of the agricultural harvester, raising the corn header, increasing the spacing between the deck plates, and changing the direction of rotation of the feed rollers.

### BRIEF DESCRIPTION

In certain embodiments, a deck plate control system for an agricultural harvester includes a controller having a memory and a processor. The controller is configured to identify termination of a row unit cleaning process. In addition, the controller is configured to control a deck plate actuator to transition a pair of deck plates of a row unit to an operational spacing in response to identifying termination of the row unit cleaning process.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a corn header;
FIG. 2 is a perspective view of an embodiment of a corn header that may be employed within the agricultural harvester of FIG. 1;
FIG. 3 is a perspective view of a portion of the corn header of FIG. 2;
FIG. 4 is a block diagram of an embodiment of a deck plate control system that may be employed within the agricultural harvester of FIG. 1; and
FIG. 5 is a flow diagram of an embodiment of a method for controlling a spacing between a pair of deck plates of a row unit.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

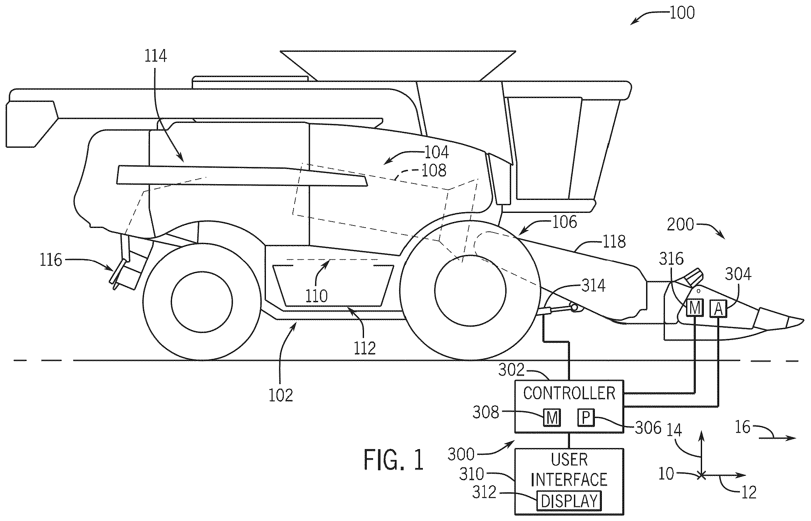

FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 of the agricultural crop processing system 104 for further processing of the ears of corn. The agricultural crop processing system 104 receives the ears of corn from the corn header 200 and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100.

The corn header 200 includes multiple row units configured to separate ears of corn from stalks, thereby leaving bare stalks engaged with the soil. The ears of corn are directed toward the inlet 106. As discussed in detail below, each row unit includes a pair of feed rollers configured to grip the stalk and to rotate in opposite directions, thereby driving the stalk rearwardly and toward the field. In addition, each row unit includes a pair of deck plates positioned over the pair of feed rollers. The pair of deck plates are separated from one another to define a gap. Furthermore, each row unit includes a pair of chains that are configured to drive or push the corn ear along the pair of deck plates. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

In the illustrated embodiment, the agricultural harvester 100 includes a deck plate control system 300 configured to automatically return the pair of deck plates of each row unit to an operational spacing upon termination of a row unit cleaning process. For example, if an operator observes that a row unit has become clogged with an obstruction (e.g., a rock, multiple corn ears, etc.), the operator may initiate a row unit cleaning process to clear the obstruction from the row unit. The row unit cleaning process may include stopping forward movement of the agricultural harvester, raising the corn header, increasing the spacing between the deck plates, and changing the direction of rotation of the feed rollers. Accordingly, the feed rollers may drive the obstruction through the larger gap between the deck plates, thereby clearing the obstruction from the row unit. As discussed in detail below, a controller 302 of the deck plate control system 300 is configured to identify termination of the row unit cleaning process, and control a deck plate actuator 304 of the deck plate control system 300 to transition the pair of deck plates to an operational spacing in response to identifying termination of the row unit cleaning process. As a result, the possibility of harvesting crops with the deck plates in a cleaning spacing is substantially reduced or eliminated, thereby increasing the effectiveness of the agricultural harvester.

In the illustrated embodiment, the controller 302 of the deck plate control system 300 is communicatively coupled to the deck plate actuator 304. In certain embodiments, the controller 302 is an electronic controller having electrical circuitry configured to control the deck plate actuator 304. In the illustrated embodiment, the controller 302 includes a processor, such as the illustrated microprocessor 306, and a memory device 308. The controller 302 may also include one or more storage devices and/or other suitable components. The processor 306 may be used to execute software, such as software for controlling the deck plate actuator 304, and so forth. Moreover, the processor 306 may include multiple microprocessors, one or more "general-purpose" microprocessors, one or more special-purpose microprocessors, and/or one or more application specific integrated circuits (ASICs), or some combination thereof. For example, the processor 306 may include one or more reduced instruction set (RISC) processors.

The memory device 308 may include a volatile memory, such as random access memory (RAM), and/or a nonvolatile memory, such as read-only memory (ROM). The memory device 308 may store a variety of information and may be used for various purposes. For example, the memory device 308 may store processor-executable instructions (e.g., firmware or software) for the processor 306 to execute, such as instructions for controlling the deck plate actuator 304, and so forth. The storage device(s) (e.g., nonvolatile storage) may include ROM, flash memory, a hard drive, or any other suitable optical, magnetic, or solid-state storage medium, or a combination thereof. The storage device(s) may store data, instructions (e.g., software or firmware for controlling the deck plate actuator 304, etc.), and any other suitable data.

In the illustrated embodiment, the deck plate control system 300 includes a user interface 310 communicatively coupled to the controller 302. The user interface 310 is configured to receive input from an operator and to provide information to the operator. The user interface 310 may include any suitable input device(s) for receiving input, such as a keyboard, a mouse, button(s), switch(es), knob(s), other suitable input device(s), or a combination thereof. In addition, the user interface 310 may include any suitable output device(s) for presenting information to the operator, such as speaker(s), indicator light(s), other suitable output device(s), or a combination thereof. In the illustrated embodiment, the user interface 310 includes a display 312 configured to present visual information to the operator. In certain embodiments, the display 312 may include a touchscreen interface configured to receive input from the operator.

As previously discussed, the controller 302 is configured to identify termination of the row unit cleaning process and to control the deck plate actuator 304 to transition the pair of deck plates to the operational spacing in response to identifying termination of the row unit cleaning process. The row unit cleaning process may include stopping forward movement of the agricultural harvester 100, raising the corn header 200 to a transport position, increasing the spacing between the deck plates, and changing the direction of rotation of the feed rollers (e.g., from a forward direction to a rearward direction). In addition, termination of the row unit cleaning process may include starting forward movement of the agricultural harvester 100, lowering the corn header 200 to a working position, and changing the direction of rotation of the feed rollers (e.g., from a rearward direction to a forward direction).

In certain embodiments, the controller 302 is configured to identify termination of the row unit cleaning process in response to determining the corn header 200 of the agricultural harvester 100 is in a working position. In the illustrated embodiment, the deck plate control system 300 includes a feeder house actuator 314 coupled to the chassis 102 of the agricultural harvester 100 and to a feeder house 118. The feeder house 118 is coupled to the chassis 102 of the agricultural harvester 100 and to the corn header 200. The feeder house actuator 314 is configured to drive the feeder house 118 to rotate relative to the chassis 102, thereby driving the corn header 200 to move between the raised transport position (e.g., transport position) and the lowered working position (e.g., working position). The corn header 200 is configured to harvest the corn crops while in the working position. In the illustrated embodiment, the feeder house actuator 314 is communicatively coupled to the controller 302, and the controller 302 is configured to control the feeder house actuator 314 to drive the corn header 200 to move between the working and transport positions. For example, to terminate the row unit cleaning process, the controller 302 may control the feeder house actuator 314 via outputting control signal(s) to move the corn header 200 to the working position. In addition, the controller 302 may identify termination of the row unit cleaning process in response to determining the corn header 200 is in the working position (e.g., based on the control signal(s) to the feeder house actuator 314 to lower the corn header 200 to the working position).

Furthermore, in certain embodiments, the controller 302 is configured to identify termination of the row unit cleaning process in response to determining the pair of feed rollers is rotating in the forward direction. In the illustrated embodiment, the deck plate control system 300 includes a feed roller drive motor 316 communicatively coupled to the controller 302. The controller 302 is configured to control the feed roller drive motor 316 via outputting control signal(s) to drive the pair of feed rollers of the row unit in the forward direction during operation of the row unit and in the rearward direction during the row unit cleaning process. The controller 302 may identify termination of the row unit cleaning process in response to determining the pair of feed rollers of the row unit is rotating in the forward direction (e.g., based on the control signal(s) to the feed roller drive motor 316 to drive the pair of feed rollers in the forward direction).

In certain embodiments, the controller 302 is configured to control the deck plate actuator 304 to transition the pair of deck plates to the cleaning spacing in response to identifying initiation of the row unit cleaning process. Accordingly, the operator may initiate the cleaning process by manually stopping forward movement of the agricultural harvester 100, manually raising the corn header 200 to the transport position, and manually changing the direction of rotation of the pair of feed rollers. The controller 302, in response to identifying initiation of the row unit cleaning process, may control the deck plate actuator 304 to transition the pair of deck plates to the cleaning spacing, thereby eliminating one manual operation of the row unit cleaning process. For example, the operator may provide an input to the user interface 310 indicative of instructions to initiate the row unit cleaning process, and the controller 302 may receive the instructions to initiate the row unit cleaning process from the user interface 310. In response, the controller 302 may control the feeder house actuator 314 to raise the corn header 200 to the transport position, and the controller 302 may control the feed roller drive motor 316 to drive the pair of feed rollers in the reverse direction. In addition, the controller 302 may identify initiation of the row unit cleaning process in response to receiving the instructions to initiate the row unit cleaning process, and the controller 302 may control the deck plate actuator 304 to transition the pair of deck plates to the cleaning spacing in response to identifying initiation of the row unit cleaning process. Furthermore, in certain embodiments, the controller 302 is configured to identify initiation of the row unit cleaning process in response to determining the pair of feed rollers is rotating in the rearward direction (e.g., based on the control signal(s) to the feed roller drive motor 316 to drive the pair of feed rollers to rotate in the forward direction).

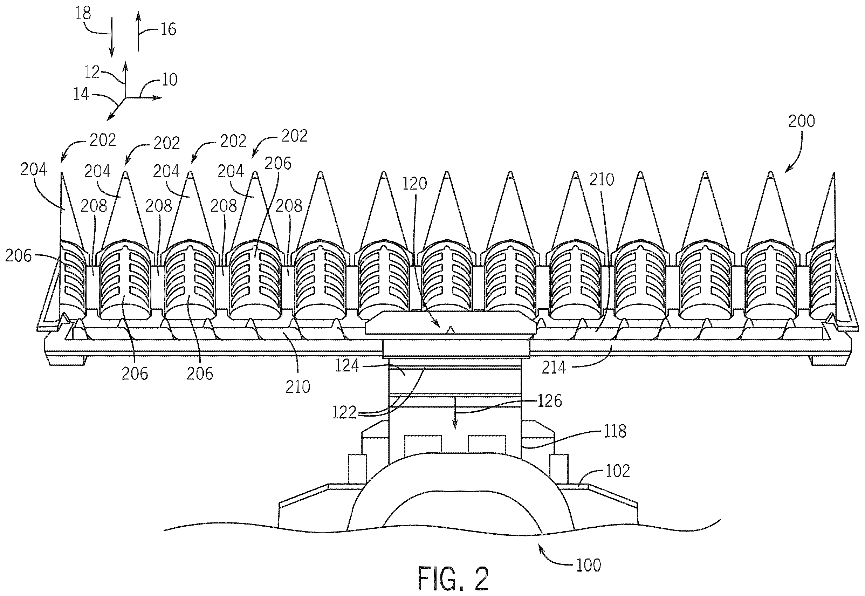

FIG. 2 is a perspective view of an embodiment of a corn header 200 that may be employed within the agricultural harvester 100 of FIG. 1. In the illustrated embodiment, the corn header 200 includes multiple crop engagement assemblies 202 distributed along the lateral axis 10 of the corn header 200. Each crop engagement assembly 202 includes a divider 204 and a hood 206. The dividers 204 are configured to divide rows of a crop (e.g., corn), and the hoods 206 are configured to block crop material from entering internal components of the corn header 200. The crop engagement assemblies 202 may be evenly spaced along the lateral axis 10 of the corn header 200. While the corn header 200 is in the working position and moving along the direction of travel 16, the dividers 204 direct crop material from each row into a respective row unit 208. In addition, the hoods 206 facilitate alignment of the crop material with the row units 208. Accordingly, the hoods 206 direct the crop material through the row units 208.

The row units 208 are configured to separate ears of corn from stalks, thereby leaving bare stalks engaged with the soil (e.g., stubble). The ears of corn may be directed to one of a pair of augers 210 configured to convey the ears of corn inwardly along the lateral axis 10 of the corn header 200 to a feeder 120 at the lateral center of the corn header 200. As illustrated, the augers 210 extend along a substantial portion of the width of the corn header 200 (e.g., along the lateral axis 10 of the corn header 200). The augers 210 may be driven by a driving mechanism (e.g., electric motor, hydraulic motor, etc.). As the agricultural harvester 100 moves through the field, the dividers 204 direct the rows of crops/crop material into the row units 208. The row units 208 engage the crop material within the field and separate the ears of corn from the stalks, and the augers 210 transport the ears of corn to the feeder 120, which directs the ears of corn toward the inlet of the agricultural crop processing system. Each row unit 208 includes a pair of feed rollers which pull the stalk of each crop downwardly through the row unit during harvesting. As the stalks of the crops are pulled through the feed rollers, the ears are separated from the stalks and are conveyed toward the augers 210.

In addition to pulling the stalks of the crops downwardly, the pairs of feed rollers drive the stalks rearwardly (e.g., along a rearward direction 18 opposite the direction of travel 16) relative to a frame 214 of the corn header 200. Due to the movement of the agricultural harvester 100, the frame 214 of the corn header 200 is driven to move forwardly along the direction of travel 16. The difference between the forward speed of the corn header frame 214 relative to the field and the rearward speed of the stalks relative to the corn header frame 214 may be referred to as the conveyance speed. A conveyance speed of about zero may enhance the efficiency of the harvesting operation (e.g., by reducing the loads/forces applied to the ears of corn) and/or may enhance subsequent agricultural operation(s) (e.g., by enhancing the engagement of the bare stalks with the soil).

The feeder 120 is disposed within the feeder house 118, and the feeder 120 is configured to move the ears of corn from the corn header 200 toward the inlet of the agricultural crop processing system. In the illustrated embodiment, the feeder 120 includes multiple bars 122 coupled to one or more chains or belts. The chain(s) or belt(s) may be driven to rotate, thereby moving the bars 122 along the feeder floor 124 in a direction 126 toward the inlet of the agricultural crop processing system.

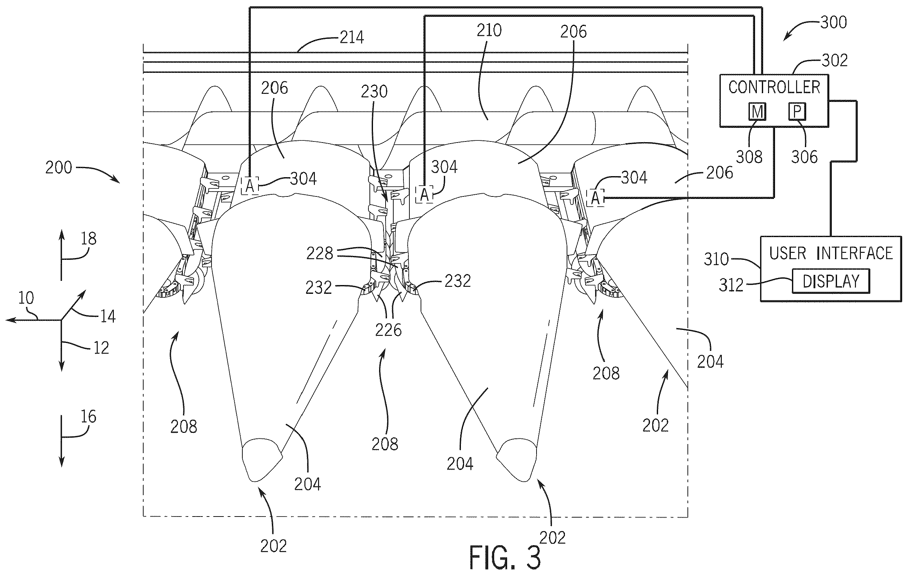

FIG. 3 is a perspective view of a portion of the corn header 200 of FIG. 2. As previously discussed, the corn header 200 includes multiple dividers 204 that direct the crops into the row units 208. Each row unit 208 is configured to separate the corn ear from the stalk, carry the corn ear toward the respective auger 210, and direct the stalk to the field. As illustrated, each row unit 208 includes a pair of feed rollers 226 configured to grip the stalk and to rotate in opposite directions (e.g., the forward direction), thereby driving the stalk rearwardly (e.g., along the rearward direction 18) and toward the field (e.g., vertically downward, below the corn header 200). Each row unit 208 also includes a pair of deck plates 228 positioned over the pair of feed rollers 226. Each deck plate 228 extends along the longitudinal axis 12 of the corn header 200, and the pair of deck plates 228 are separated from one another along the lateral axis 10 of the corn header 200 to define a gap 230. Furthermore, each row unit 208 includes a pair of chains 232 (e.g., with lugs) that are configured to drive or push the corn ear along the pair of deck plates 228 toward the respective auger 210. Each hood 206 is positioned rearward of each divider 204 and between adjacent row units 208 to cover various components, such as the deck plate actuators 304, linkage(s), and so forth. While each row unit includes a pair of feed rollers 226 and a pair of chains 232 in the illustrated embodiment, in other embodiments, at least one row unit may include other/additional suitable component(s) configured to facilitate separating the ear of corn from the stalk, directing the ear of corn to the respective auger, and directing the stalk toward the surface of the agricultural field.

In the illustrated embodiment, each deck plate actuator 304 of the deck plate control system 300 is configured to transition the pair of deck plates 228 of a respective row unit 208 between the cleaning spacing and the operational spacing. As used herein with regard to the pair of deck plates, "transition" refers to a change in the spacing between the deck plates, which may be caused by moving one or both of the pair of deck plates. In the illustrated embodiment, each deck plate actuator 304 of the deck plate control system 300 is configured to drive the pair of deck plates 228 of a respective row unit 208 to move toward and away from one another along the lateral axis 10 of the corn header 200 to change a size (e.g., width) of the gap 230 between the pair of deck plates 228. Accordingly, each deck plate actuator 304 is configured to drive a respective pair of deck plates 228 to move. However, in other embodiments, a deck plate actuator may be configured to drive each deck plate to move, such that the number of deck plate actuators is equal to the number of deck plates. In addition, in certain embodiments, a deck plate actuator may be configured to drive one deck plate of each pair of deck plates to move. Furthermore, in certain embodiments, a single deck plate actuator may be configured to drive one or more deck plates of each pair of multiple pairs of deck plates to move, such that deck plates of the multiple pairs move together. Each deck plate actuator 304 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof.

In certain embodiments, the controller 302 is configured to control the operational spacing between the pair of deck plates 228 of each row unit 208 of the corn header 200 based on a determined width of the ears of corn. For example, while harvesting ears of corn having larger determined widths, the controller 302 may control the deck plate actuator(s) 304 to increase the operational spacing between the pair of deck plates 228 of each row unit 208, and while harvesting ears of corn having smaller determined widths, the controller 302 may control the deck plate actuator(s) 304 to decrease the operational spacing between the pair of deck plates 228 of each row unit 208. As a result, each row unit may effectively block ears of corn from passing through the gap between the pair of deck plates while enabling the stalk to pass through the gap, thereby enhancing the efficiency of the harvesting operation. Furthermore, in certain embodiments, the operational spacing between the pair of deck plates 228 may be manually controlled. For example, in certain embodiments, the operator may provide a desired operational spacing into the user interface 310, and the user interface 310 may output a signal to the controller 302 indicative of the desired operational spacing. The controller 302, in turn, may control the deck plate actuator(s) 304 to establish the desired operational spacing.

Furthermore, if an operator observes that a row unit 208 has become clogged with an obstruction (e.g., a rock, multiple corn ears, etc.), the operator may initiate a row unit cleaning process to clear the obstruction from the row unit. As previously discussed, the row unit cleaning process may include stopping forward movement of the agricultural harvester, raising the corn header, increasing the spacing between the deck plates from the operational spacing to a cleaning spacing, and changing the direction of rotation of the feed rollers. Accordingly, the feed rollers may drive the obstruction through the larger gap between the deck plates, thereby clearing the obstruction from the row unit. The controller 302 is configured to identify termination of the row unit cleaning process and to control the deck plate actuator(s) 304 to transition the pair of deck plates 228 to the operational spacing in response to identifying termination of the row unit cleaning process. As a result, the possibility of harvesting crops with the deck plates 228 in the cleaning spacing is substantially reduced or eliminated, thereby increasing the effectiveness of the agricultural harvester. As used herein, "cleaning spacing" refers to a spacing between the pair of deck plates (e.g., width of the gap) that is greater than the operational spacing (e.g., width of the gap).

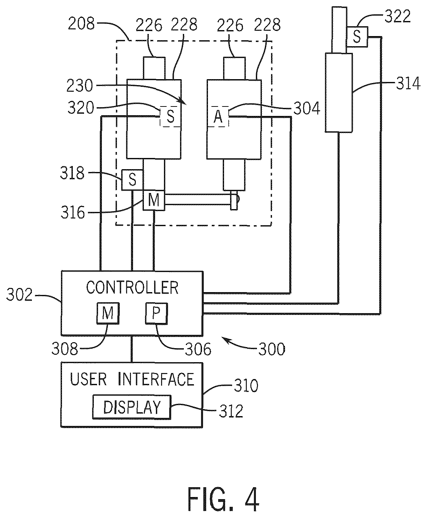

FIG. 4 is a block diagram of an embodiment of a deck plate control system 300 that may be employed within the agricultural harvester of FIG. 1. As previously discussed, the controller 302 of the deck plate control system 300 is communicatively coupled to the deck plate actuator 304, to the feed roller drive motor 316, and to the feeder house actuator 314. Furthermore, as previously discussed, the deck plate actuator 304 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof. Furthermore, the feed roller drive motor 316 may include any suitable type of motor(s), such as hydraulic motor(s), pneumatic motor(s), electric motor(s), other suitable type(s) of motor(s), or a combination thereof. In the illustrated embodiment, each row unit 208 includes a single feed roller drive motor 316 configured to drive the respective pair of feed rollers 226 to rotate. However, in other embodiments, a feed roller drive motor may be configured to drive each feed roller to rotate, such that the number of feed roller drive motors is equal to the number of feed rollers. Furthermore, in certain embodiments, a single feed roller drive motor may be configured to drive multiple pairs of feed rollers to rotate (e.g., the feed rollers of all of the row units of the corn header). In certain embodiments, each feed roller drive motor may include a transmission configured to control the direction of rotation of the respective feed roller(s). In such embodiments, the direction of rotation of the feed rollers may be controlled by controlling the transmission(s) of the feed roller drive motor(s). In addition, the feeder house actuator 314 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof.

As previously discussed, if the operator observes that a row unit has become clogged with an obstruction (e.g., a rock, multiple corn ears, etc.), the operator may initiate the row unit cleaning process to clear the obstruction from the row unit. The row unit cleaning process may include stopping forward movement of the agricultural harvester, raising the corn header from the lowered working position (e.g., working position) to the raised transport position (e.g., transport position), increasing the spacing between the pair of deck plates 228 from the operational spacing to the cleaning spacing, and changing the direction of rotation of the pair of feed rollers 226 from the forward direction to the rearward direction. Accordingly, the feed rollers may drive the obstruction through the larger gap between the deck plates, thereby clearing the obstruction from the row unit.

In certain embodiments, the operator may perform the cleaning process manually. For example, to stop forward movement of the agricultural harvester, the operator may operate various controls within the cab of the agricultural harvester, such as moving a throttle lever, depressing a brake pedal, moving a gear selection lever, etc. Furthermore, to raise the corn header from the lowered working position to the raised transport position, the operator may provide an input to the user interface 310 indicative of instructions to raise the corn header, and the user interface may output a signal to the controller 302 indicative of the instructions to raise the corn header. The controller 302, in turn, may control the feeder house actuator 314 to raise the corn header from the lowered working position to the raised transport position. However, in other embodiments, the feeder house actuator may not be communicatively coupled to the controller. In such embodiments, the operator may manually raise the corn header by controlling the feeder house actuator with a control (e.g., lever, etc.) within the cab of the agricultural harvester. In addition, to increase the spacing between the pair of deck plates 228 from the operational spacing to the cleaning spacing, the operator may provide an input to the user interface 310 indicative of instructions to increase the spacing between the pair of deck plates 228, and the user interface 310 may output a signal to the controller 302 indicative of the instructions to increase the spacing between the pair of deck plates 228. The controller 302, in turn, may control the deck plate actuator(s) 304 to increase the spacing between the pair of deck plates 228 from the operational spacing to the cleaning spacing. Furthermore, to change the direction of rotation of the pair of feed rollers 226 from the forward direction to the rearward direction, the operator may provide an input to the user interface 310 indicative of instructions to change the direction of rotation of the pair of feed rollers 226, and the user interface 310 may output a signal to the controller 302 indicative of the instructions to change the direction of rotation of the pair of feed rollers 226. The controller 302, in turn, may control the feed roller drive motor(s) 316 to change the direction of rotation of the pair of feed rollers 226 from the forward direction to the rearward direction. However, in other embodiments, the feed roller drive motor(s) may not be communicatively coupled to the controller. In such embodiments, the operator may manually change the direction of rotation of the feed rollers by controlling the feed roller drive motor(s) with a control (e.g., lever, button, knob, etc.) within the cab of the agricultural harvester.

In certain embodiments, the controller 302 of the deck plate control system 300 is configured to automatically perform at least a portion of the row unit cleaning process. For example, in certain embodiments, the controller 302 is configured to control the deck plate actuator(s) 304 to transition the pair of deck plates 228 of the row unit 208 from the operational spacing to the cleaning spacing in response to identifying initiation of the row unit cleaning process. Initiation of the row unit cleaning process may include stopping forward movement of the agricultural harvester, raising the corn header from the lowered working position to the raised transport position, and changing the direction of rotation of the pair of feed rollers from the forward direction to the rearward direction. In certain embodiments, the controller 302 is configured to identify initiation of the row unit cleaning process in response to determining the pair of feed rollers 226 of the row unit 208 is rotating in the rearward direction. Accordingly, in response to the operator manually stopping forward movement of the agricultural harvester, raising the corn header from the lowered working position to the raised transport position, and changing the direction of rotation of the pair of feed rollers 226 from the forward direction to the rearward direction, the controller 302 may control the deck plate actuator(s) 304 to transition the pair of deck plates 228 from the operational spacing to the cleaning spacing, thereby eliminating one manual operation of the row unit cleaning process.

In certain embodiments, the controller 302 is configured to determine the pair of feed rollers 226 of the row unit 208 is rotating in the rearward direction based on control signal(s) to the feed roller drive motor(s) 316. For example, as previously discussed, the operator may change the direction of rotation of the feed rollers from the forward direction to the rearward direction by providing an input to the user interface 310. In turn, the user interface 310 may output a signal to the controller 302 indicative of instructions to change the direction of rotation of the pair of feed rollers 226, and the controller 302 may control the feed roller drive motor(s) 316 via outputting control signal(s) to change the direction of rotation of the pair of feed rollers 226 from the forward direction to the rearward direction. In response to outputting control signal(s) to the feed roller drive motor(s) 316, the controller 302 may determine the pair of feed rollers 226 is rotating in the rearward direction. As a result, the controller 302 may identify initiation of the row unit cleaning process. Furthermore, in certain embodiments (e.g., in embodiments in which the feed roller drive motor(s) are not communicatively coupled to the controller), the controller 302 may determine the pair of feed rollers 226 is rotating in the rearward direction based on feedback from a feed roller sensor 318. In the illustrated embodiment, the feed roller sensor 318 is communicatively coupled to the controller 302 and configured to output a sensor signal indicative of the direction of rotation of the pair of feed rollers 226. Accordingly, in certain embodiments, the controller 302 is configured to determine the pair of feed rollers 226 is rotating in the rearward direction based on feedback from the feed roller sensor 318, and the controller 302 is configured to identify initiation of the row unit cleaning process in response to determining the pair of feed rollers is rotating in the rearward direction. In embodiments in which the controller 302 is configured to determine the pair of feed rollers 226 of the row unit 208 is rotating in the rearward direction based on control signal(s) to the feed roller drive motor(s) 316, the feed roller sensor 318 may be omitted.

In certain embodiments, the controller 302 is configured to automatically perform multiple steps of the row unit cleaning process in response to operator input. For example, the operator may provide an input to the user interface 310 indicative of instructions to initiate the row unit cleaning process, and the user interface 310 may output a signal to the controller 302 indicative of the instructions to initiate the row unit cleaning process. The controller 302, in turn, may control the feeder house actuator 314 to raise the corn header from the lowered working position to the raised transport position, control the deck plate actuator(s) 304 to increase the spacing between the pair of deck plates 228 from the operational spacing to the cleaning spacing, and control the feed roller drive motor(s) 316 to change the direction of rotation of the pair of feed rollers 226 from the forward direction to the rearward direction. Furthermore, in certain embodiments, the controller may be communicatively coupled to a movement control system of the agricultural harvester, and the controller may be configured to control the movement control system to stop movement of the agricultural harvester in response to receiving the signal from the user interface indicative of the instructions to initiate the row unit cleaning process.

In the illustrated embodiment, the deck plate control system 300 includes a deck plate spacing sensor 320 communicatively coupled to the controller 302. The deck plate spacing sensor 320 is configured to output a sensor signal indicative of the width of the gap 230 between the pair of deck plates 228 (e.g., the spacing between the pair of deck plates 228), and the controller 302 is configured to receive the sensor signal. In addition, the controller 302 is configured to determine the spacing between the pair of deck plates 228 based on feedback from the deck plate spacing sensor 320. For example, the controller 302 may determine the operational spacing between the pair of deck plates 228 based on feedback from the deck plate spacing sensor 320 while the row unit 208 is in operation. As used herein with regard to the row unit, "operation" refers to the row unit harvesting crops while the corn header is in the working position. Furthermore, in certain embodiments, in response to determining the spacing between the pair of deck plates 228, the controller 302 is configured to control the user interface 310 to present the spacing (e.g., current spacing). For example, the controller 302 may control the user interface 310 to present the spacing (e.g., current spacing) on the display 312, thereby providing the operator with a visual indication of the spacing (e.g., current spacing) between the pair of deck plates.

Furthermore, in the illustrated embodiment, the deck plate control system 300 includes a corn header position sensor 322 communicatively coupled to the controller 302. The corn header position sensor 322 is configured to output a sensor signal indicative of the position of the corn header (e.g., relative to the chassis of the agricultural harvester, relative to the surface of the field, etc.), and the controller 302 is configured to receive the sensor signal. In addition, the controller 302 is configured to determine the position of the corn header based on feedback from the corn header position sensor 322. For example, the controller 302 may determine the corn header is in the lowered working position or the raised transport position based on feedback from the corn header position sensor 322. In addition, in certain embodiments, the controller 302 may control the user interface 310 to present the corn header position on the display 312, thereby providing the operator with a visual indication of the corn header position (e.g., whether the corn header is in the lowered working position or the raised transport position).

In the illustrated embodiment, the controller 302 is configured to identify termination of the row unit cleaning process and to control the deck plate actuator(s) 304 to transition the pair of deck plates 228 of the row unit 208 to the operational spacing in response to identifying termination of the row unit cleaning process. In certain embodiments, the controller 302 is configured to identify termination of the row unit cleaning process in response to determining the corn header is in the working position (e.g., lowered working position). In certain embodiments (e.g., in embodiments in which the feeder house actuator is not communicatively coupled to the controller), the controller 302 may determine the corn header is in the working position based on feedback from the corn header position sensor 322. Furthermore, in embodiments in which the feeder house actuator 314 is communicatively coupled to the controller 302, the controller 302 may determine the corn header is in the working position based on control signal(s) to the feeder house actuator 314 to lower the corn header to the working position. For example, the operator may provide an input to the user interface 310 indicative of instructions to move the corn header from the raised transport position to the lowered working position, and the user interface 310 may output a signal to the controller 302 indicative of the instructions to move the corn header from the raised transport position to the lowered working position. The controller 302, in turn, may control the feeder house actuator 314 via outputting control signal(s) to lower the corn header from the raised transport position to the lowered working position. In response to outputting control signal(s) to the feeder house actuator 314, the controller 302 may determine the corn header is in the lowered working position. As a result, the controller 302 may identify termination of the row unit cleaning process. In embodiments in which the controller is configured to determine the corn header is in the working position based on the control signal(s) to the feeder house actuator, the corn header position sensor may be omitted.

In certain embodiments, the controller 302 is configured to identify termination of the row unit cleaning process in response to determining the pair of feed rollers 226 is rotating in the forward direction. In certain embodiments (e.g., in embodiments in which the feed roller drive motor(s) are not communicatively coupled to the controller), the controller 302 may determine the pair of feed rollers 226 is rotating in the forward direction based on feedback from the feed roller sensor 318. Furthermore, in embodiments in which the feed roller drive motor(s) 316 are communicatively coupled to the controller 302, the controller 302 may determine the pair of feed rollers 226 is rotating in the forward direction based on control signal(s) to the feed roller drive motor(s) 316 to drive the pair of feed rollers 226 in the forward direction. For example, the operator may provide an input to the user interface 310 indicative of instructions to change the direction of rotation of the pair of feed rollers 226 from the rearward direction to the forward direction, and the user interface 310 may output a signal to the controller 302 indicative of the instructions to change the direction of rotation of the pair of feed rollers 226 from the rearward direction to the forward direction. The controller 302, in turn, may control the feed roller drive motor(s) 316 via outputting control signal(s) to drive the pair of feed rollers 226 to rotate in the forward direction. In response to outputting control signal(s) to the feed roller drive motor(s) 316, the controller 302 may determine the pair of feed rollers 226 is rotating in the forward direction. As a result, the controller 302 may identify termination of the row unit cleaning process. In embodiments in which the controller is configured to determine the pair of feed rollers is rotating in the forward direction based on the control signal(s) to the feed roller drive motor(s), the feed roller sensor may be omitted.

In certain embodiments, the controller 302 is configured to determine the operational spacing based on feedback from the deck plate spacing sensor 320 while the row unit 208 is in operation. For example, while the corn header is in the working position and the row unit 208 is harvesting crops, the controller 302 may determine the current spacing between the pair of deck plates 228 based on feedback from the deck plate spacing sensor 320, and the controller 302 may store the current spacing as the operational spacing. Accordingly, in response to identifying termination of the row unit cleaning process, the controller may control the deck plate actuator 304 to transition the pair of deck plates 228 to the operational spacing stored within the controller 302 (e.g., based on feedback from the deck plate spacing sensor 320. However, in certain embodiments, before or during the harvesting operation, the operator may provide an input to the user interface 310 indicative of the operational spacing, and the user interface 310 may output a signal to the controller 302 indicative of instructions to transition the pair of deck plates 228 to the operational spacing. The controller 302, in turn, may control the deck plate actuator 304 to transition the pair of deck plates 228 to the operational spacing. In such embodiments, the controller 302 may store the operational spacing provided by the operator and, in certain embodiments, the deck plate spacing sensor may be omitted.

In certain embodiments, the controller 302 is configured to inform the operator that the pair of deck plates 228 is not at the stored operational spacing in response to identifying initiation of the harvesting operation while the pair of deck plates 228 is not at the stored operational spacing. For example, the controller 302 may be configured to identify initiation of the harvesting operation (e.g., after termination of the row unit cleaning process) in response to determining the corn header is in the lowered working position (e.g., based on feedback from the corn header position sensor 322) and/or the pair of feed rollers 226 are rotating in the forward direction (e.g., based on feedback from the feed roller sensor 318). In response to identifying initiation of the harvesting operation, the controller 302 may determine whether the pair of deck plates 228 is at the stored operational spacing. For example, the controller 302 may determine the current spacing between the pair of deck plates 228 based on feedback from the deck plate spacing sensor 320, and the controller 302 may compare the current spacing to the stored operational spacing. In response to determining a difference between the current spacing and the stored operational spacing is greater than a threshold value, the controller 302 may control the user interface 310 to present an indication (e.g., on the display 312) indicative of the pair of deck plates 228 not being at the stored operational spacing. In certain embodiments, the controller may control the deck plate actuator(s) to transition the pair of deck plates to the operational spacing in response to identifying termination of the row unit cleaning process and inform the operator via the user interface that the pair of deck plates is not at the operational spacing in response to identifying initiation of the harvesting operation (e.g., to inform the operator the deck plates did not effectively transition to the operational spacing). Furthermore, in certain embodiments, the controller may inform the operator via the user interface that the pair of deck plates is not at the stored operational spacing in response to identifying initiation of the harvesting operation while the pair of deck plates is not at the stored operational spacing, and the controller may not control the deck plate actuator to transition the pair of deck plates to the operational spacing in response to identifying termination of the row unit cleaning process. In such embodiments, the controller may control the user interface to present an input (e.g., virtual button, etc.) that enables the operator to provide an input to the user interface indicative of instructions to transition the pair of deck plates to the operational spacing. In response to receiving the input from the operator, the user interface may output a signal to the controller indicative of the instructions to transition the pair of deck plates to the operational spacing, and the controller may control the deck plate actuator(s) to transition the pair of deck plates to the operational spacing. Furthermore, in certain embodiments, the controller may control the user interface to inform the operator to check the spacing between the pair of deck plates in response to identifying initiation of the harvesting operation (e.g., without comparing the current spacing to the stored operational spacing).

While control of a single row unit 208 is disclosed above, in certain embodiments, the deck plate control system 300 may be configured to control multiple row units 208 of the corn header (e.g., independently and/or collectively). For example, in certain embodiments, the deck plate actuator(s) may be configured to control all of the pairs of deck plates of the corn header collectively, such that all of the pairs of deck plates transition together. In such embodiments, the controller may be configured to control the deck plate actuator(s) to transition each pair of deck plates to the operational spacing in response to identifying termination of the row unit cleaning process. In addition, the controller may be configured to control the deck plate actuator(s) to transition each pair of deck plates to the cleaning spacing in response to identifying initiation of the row unit cleaning process. Furthermore, because all of the pairs of deck plates transition together, the deck plate control system may include a single deck plate spacing sensor for monitoring the spacing between one pair of deck plates. In addition, the controller may identify termination of the row unit cleaning process in response to determining any pair of feed rollers is rotating in the forward direction, and/or the controller may identify initiation of the row unit cleaning process in response to determining any pair of feed rollers is rotating in the rearward direction.

Furthermore, in embodiments in which the deck plate actuators are configured to control pairs of deck plates independently of one another, a portion of the row unit cleaning process may be performed for each row unit individually. For example, if an operator observes that one row unit has become clogged with an obstruction (e.g., a rock, multiple corn ears, etc.), the operator may initiate the row unit cleaning process to clear the obstruction from the one row unit. Accordingly, the forward movement of the agricultural harvester may be stopped (e.g., via the operator operating controls within the cab), and the corn header may be raised from the lowered working position to the raised transport position (e.g., via the operator providing input to the user interface, via the operator operating a control within the cab). In addition, the feed roller drive motor(s) of at least the one row unit (e.g., only the one row unit in embodiments in which the deck plate control system has independently controllable feed roller drive motors for the row units, all of the row units in embodiments in which the feed roller drive motor(s) drive all of the feed rollers collectively) may be controlled to change the direction of rotation of the respective pair of feed rollers from the forward direction to the rearward direction (e.g., via the operator providing input to the user interface, via the operator operating a control within the cab). Furthermore, the deck plate actuator(s) of the one row unit may be controlled to transition the respective pair of deck plates from the operational spacing to the cleaning spacing (e.g., via the operator providing input to the user interface, via the controller in response to identifying initiation of the row unit cleaning process, such as by determining the respective pair of feed rollers is rotating in the rearward direction).

In embodiments in which a portion of the row unit cleaning process is performed for each row unit individually, the controller may identify termination of the row unit cleaning process for the one row unit, and the controller may control the deck plate actuator(s) of the one row unit to transition the respective pair of deck plates from the cleaning spacing to the operational spacing in response to identifying termination of the row unit cleaning process for the one row unit. For example, the controller may identify termination of the row unit cleaning process for all of the row units in response to determining the corn header is in the lowered working position. Furthermore, the controller may identify termination of the row unit cleaning process for the one row unit in response to determining the pair of feed rollers of the one row unit is rotating in the forward direction (e.g., based on feedback from the respective feed roller sensor in embodiments in which the feed roller drive motors are independently controllable for the pairs of feed rollers, based on feedback from any feed roller sensor in embodiments in which the feed roller drive motor(s) drive all of the feed rollers collectively, based on control signal(s) to the feed roller drive motor(s)).

In addition, in certain embodiments, the controller may be configured to determine the operational spacing between the pair of deck plates for each row unit (e.g., based on feedback from the respective deck plate spacing sensor while the row unit is in operation, based on input to the user interface). In such embodiments, the controller may store the operational spacing for each row unit and control the deck plate actuator(s) of the row unit to transition the respective pair of deck plates to the operational spacing in response to identifying termination of the row unit cleaning process at least with regard to the row unit. However, in other embodiments, the controller may determine the operational spacing between the pair of deck plates for all row units (e.g., based on feedback from the deck plate spacing sensor of one row unit). In such embodiments, the controller may store the single operational spacing and control the deck plate actuator(s) of row unit(s) to transition the respective pair(s) of deck plates to the single operational spacing in response to identifying termination of the row unit cleaning process at least with regard to the row unit(s).

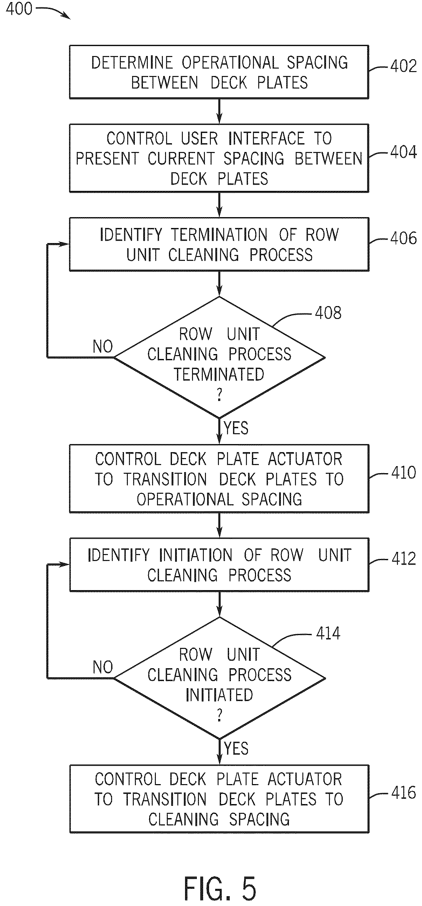

FIG. 5 is a flow diagram of an embodiment of a method 400 for controlling a spacing between a pair of deck plates of a row unit. The method 400 may be performed by the controller disclosed above with reference to FIG. 4, by one or more other suitable controllers, or a combination thereof. Furthermore, the steps of the method 400 may be performed in the order disclosed below or in any other suitable order. In addition, in certain embodiments, one or more steps of the method 400 may be omitted, and/or the method may include one or more additional steps.

In the illustrated embodiment, the method 400 includes determining the operational spacing between the pair of deck plates based on feedback from the deck plate spacing sensor while the row unit is in operation, as represented by block 402. As previously discussed, the row unit is in operation while the corn header is in the working position and the row unit is harvesting crops. Furthermore, in the illustrated embodiment, the method 400 includes controlling the user interface to present the current spacing between the pair of deck plates based on feedback from the deck plate spacing sensor, as represented by block 404.

The method 400 also includes identifying termination of the row unit cleaning process, as represented by block 406. As previously discussed, termination of the row unit cleaning process may be identified by determining the corn header is in the working position and/or by determining the pair of feed rollers is rotating in the forward direction. Furthermore, the method 400 includes determining whether termination of the row unit cleaning process is identified, as represented by block 408, and controlling the deck plate actuator(s) to transition the pair of deck plates to the operational spacing, as represented by block 410. If termination of the row unit cleaning process is not identified, the method 400 returns to block 406 from block 408. However, in response to identifying termination of the row unit cleaning process, the method proceeds to block 410 from block 408.

The method 400 also includes identifying initiation of the row unit cleaning process, as represented by block 412. As previously discussed, initiation of the row unit cleaning process may be identified by determining the pair of feed rollers is rotating in the rearward direction. Furthermore, the method 400 includes determining whether initiation of the row unit cleaning process is identified, as represented by block 414, and controlling the deck plate actuator(s) to transition the pair of deck plates to the cleaning spacing, as represented by block 416. If initiation of the row unit cleaning process is not identified, the method 400 returns to block 412 from block 414. However, in response to identifying initiation of the row unit cleaning process, the method proceeds to block 416 from block 414.

## Claims

1. A deck plate control system (300) for an agricultural harvester (100), **characterized in that** the deck plate control system (300) comprises:
a controller (302) comprising a memory (308) and a processor (306), wherein the controller (302) is configured to:
identify termination of a row unit cleaning process; and
control a deck plate actuator (304) to transition a pair of deck plates (228) of a row unit (208) to an operational spacing in response to identifying termination of the row unit cleaning process.

2. The deck plate control system (300) of claim 1, wherein the controller (302) is configured to identify termination of the row unit cleaning process in response to determining a corn header (200) of the agricultural harvester (100) is in a working position.

3. The deck plate control system (300) of any of claims 1-2, wherein the controller (302) is configured to identify termination of the row unit cleaning process in response to determining a pair of feed rollers (226) of the row unit (208) is rotating in a forward direction.

4. The deck plate control system (300) of any of claims 1-3, comprising a deck plate spacing sensor (320) communicatively coupled to the controller (302).

5. The deck plate control system (300) of claim 4, wherein the controller (302) is configured to determine the operational spacing based on feedback from the deck plate spacing sensor (320) while the row unit (208) is in operation.

6. The deck plate control system (300) of any of claims 4-5, wherein the controller (302) is configured to control a user interface (310) to present a current spacing between the pair of deck plates (228) based on the feedback from the deck plate spacing sensor (320).

7. The deck plate control system (300) of any of claims 1-6, wherein the controller (302) is configured to:
identify initiation of the row unit cleaning process; and
control the deck plate actuator (304) to transition the pair of deck plates (228) of the row unit (208) to a cleaning spacing in response to identifying initiation of the row unit cleaning process.

8. The deck plate control system (300) of claim 7, wherein the controller (302) is configured to identify initiation of the row unit cleaning process in response to determining a pair of feed rollers (226) of the row unit (208) is rotating in a rearward direction.

9. The deck plate control system (300) of any of claims 1-8, comprising the deck plate actuator (304) configured to control spacing between the pair of deck plates (228).

10. A method for controlling a spacing between a pair of deck plates (228) of a row unit (208) of an agricultural harvester (100), **characterized in that** the method comprises:
identifying, via a controller (302) comprising a memory (308) and a processor (306), termination of a row unit cleaning process; and
controlling, via the controller (302), a deck plate actuator (304) to transition the pair of deck plates (228) to an operational spacing in response to identifying termination of the row unit cleaning process.

11. The method of claim 10, wherein identifying termination of the row unit cleaning process comprises determining a corn header (200) of the agricultural harvester (100) is in a working position.

12. The method of any of claims 10-11, wherein identifying termination of the row unit cleaning process comprises determining a pair of feed rollers (226) of the row unit (208) is rotating in a forward direction.

13. The method of any of claims 10-12, comprising determining, via the controller (302), the operational spacing based on feedback from a deck plate spacing sensor (320) while the row unit (208) is in operation.

14. The method of claim 13, comprising controlling, via the controller (302), a user interface (310) to present a current spacing between the pair of deck plates (228) based on the feedback from the deck plate spacing sensor (320).

15. The method of any of claims 10-14, comprising:
identifying, via the controller (302), initiation of the row unit cleaning process; and
controlling, via the controller (302), the deck plate actuator (304) to transition the pair of deck plates (228) of the row unit (208) to a cleaning spacing in response to identifying initiation of the row unit cleaning process.
